# EUROPEAN PATENT APPLICATION

(11) **EP 4 847 327 A1**
(43) Date of publication of application: **02.12.2026**
(21) Application number: 26179567.8
(22) Date of filing: 19.05.2026
(51) Int. Cl.: B60S 1/08

(54) **VEHICLE WIPER DRIVE DEVICE**

(30) Priority: 26.05.2025 JP 2025086867
(71) Applicant: Mitsuba Corporation, Kiryu-shi, Gunma 376-8555 (JP)
(72) Inventor: OHORI, Ryo, Kiryu-shi, Gunma, 3768555 (JP); MOCHIDA, Atsushi, Kiryu-shi, Gunma, 3768555 (JP)
(74) Representative: Becker Kurig & Partner Patentanwälte mbB

(57) **Abstract**

A vehicle wiper drive device (A) causes wiper blade (11a, 11b) to perform reciprocating wiping operation between lower and upper reversal positions provided on a surface to be wiped by applying a motor drive signal from inverter (1) to three-phase motor (2). The device includes: control unit (3) that calculates a load integrated value of the motor, and when a vehicle speed is not less than a predetermined vehicle speed threshold value and load integrated value is not less than a predetermined load threshold value, executes first forced storage mode in which 120° conduction control is performed setting a conduction angle of motor drive signal to 120°, and advance angle control is performed that advances conduction timing of motor drive signal relative to reference position, thereby moving wiper blade toward a position that does not obstruct field of view, stopping wiper blade at the position, and prohibiting next wiping operation.

## Description

### BACKGROUND

### Technical Field

The disclosure relates to a vehicle wiper drive device.

### Related Art

For example, Patent Document 1 below discloses a vehicle wiper control device. The vehicle wiper control device performs a wiper stop process of stopping a wiper blade at a lower reversal position or a storage position (P0) set below the lower reversal position in response to a load of an electric motor that causes the wiper blade to perform a wiping operation exceeding a predetermined threshold value. According to the vehicle wiper control device, the wiper blade is prevented from obstructing the driver's field of view.

### Citation List

### Patent Document

[Patent Document 1] WO 2020/021994

### SUMMARY

### Technical Problem

In the case where the load of the electric motor functioning as a three-phase motor exceeds a predetermined threshold value, the drive output may be increased beyond the normal level in order to move the wiper blade to the lower reversal position or the storage position. In addition, such an increase in drive output may be performed while preventing or reducing damage to the three-phase motor due to overcurrent of the drive current

The disclosure has been made in view of the above-described circumstances, and aims to provide a vehicle wiper drive device capable of moving a wiper blade to a position that does not obstruct the field of view while preventing or reducing damage to the three-phase motor under a high load condition of the three-phase motor.

### Solution to Problem

In order to achieve the above-described object, the disclosure adopts, as a first solution relating to a vehicle wiper drive device, the following device: a vehicle wiper drive device that causes a wiper blade to perform a reciprocating wiping operation between a lower reversal position and an upper reversal position provided on a surface to be wiped by applying a motor drive signal from an inverter to a three-phase motor. The vehicle wiper drive device includes a control unit that calculates a load integrated value of the three-phase motor, and in response to a vehicle speed being not less than a predetermined vehicle speed threshold value and the load integrated value being not less than a predetermined load threshold value, executes a first forced storage mode in which a 120° conduction control is performed that sets a conduction angle of the motor drive signal to 120°, and an advance angle control is performed that advances a conduction timing of the motor drive signal relative to a reference position, thereby moving the wiper blade toward a position that does not obstruct a field of view, stopping the wiper blade at the position that does not obstruct the field of view, and prohibiting a next wiping operation.

In the disclosure, as a second solution relating to a vehicle wiper drive device, in the first solution, the control unit performs PWM control of the three-phase motor using a PWM (Pulse Width Modulation) signal, and in response to a rotation speed of the three-phase motor being not more than a predetermined rotation speed threshold value and a duty ratio of the PWM signal reaching a predetermined upper limit value, executes a low-speed mode in which the three-phase motor is subjected to the 120° conduction control without performing the advance angle control, and the control unit transitions to the first forced storage mode in response to the vehicle speed being not less than the vehicle speed threshold value and the load integrated value being not less than the load threshold value during execution of the low-speed mode.

In the disclosure, as a third solution relating to a vehicle wiper drive device, in the first solution, the control unit executes a second forced storage mode in which the wiper blade is moved toward the position that does not obstruct the field of view and stopped at the position that does not obstruct the field of view by performing the 120° conduction control and the advance angle control, and a next wiping operation is prohibited, in response to the vehicle speed being not less than the vehicle speed threshold value, the load integrated value being lower than the load threshold value, and the three-phase motor being in a locked state.

In the disclosure, as a fourth solution relating to a vehicle wiper drive device, in the third solution, the control unit performs PWM control of the three-phase motor using a PWM (Pulse Width Modulation) signal, and in response to a rotation speed of the three-phase motor being not more than a predetermined rotation speed threshold value and a duty ratio of the PWM signal reaching a predetermined upper limit value, executes a low-speed mode in which the three-phase motor is subjected to the 120° conduction control without performing the advance angle control, and the control unit transitions to the second forced storage mode in response to the vehicle speed being not less than the vehicle speed threshold value, the load integrated value being lower than the load threshold value, and the three-phase motor being in the locked state during execution of the low-speed mode.

In the disclosure, as a fifth solution relating to a vehicle wiper drive device, in the third solution, the control unit executes the second forced storage mode only in a case where the wiper blade is within a predetermined region, the predetermined region is a region from the upper reversal position to a boundary point, and the boundary point is located below an intermediate point between the upper reversal position and the lower reversal position and above the lower reversal position.

In the disclosure, as a sixth solution relating to a vehicle wiper drive device, in any one of the first to fifth solutions, the control unit executes a high-speed mode in which the three-phase motor is subjected to an overlap conduction control and the advance angle control, in response to the vehicle speed being lower than the vehicle speed threshold value, and in response to the vehicle speed being not less than the vehicle speed threshold value and the wiper blade not being in a return-path wiping operation.

### Effects

According to the disclosure, it is possible to provide a vehicle wiper drive device capable of moving the wiper blade to a position that does not obstruct the field of view while preventing or reducing damage to the three-phase motor under a high load condition of the three-phase motor.

### BRIEF DESCRIPTION OF THE DRAWINGS

FIG. 1 is a block diagram illustrating a configuration of a vehicle wiper drive device according to an embodiment of the disclosure.
FIG. 2 is a schematic diagram illustrating a drive target of the vehicle wiper drive device according to an embodiment of the disclosure.
FIG. 3 is a flowchart illustrating an operation of the vehicle wiper drive device according to an embodiment of the disclosure.
FIG. 4 is a schematic diagram illustrating a visual obstruction area in an embodiment of the disclosure.
FIG. 5 is a schematic diagram illustrating an operational effect of the vehicle wiper drive device according to an embodiment of the disclosure.

### DESCRIPTION OF THE EMBODIMENTS

Hereinafter, an embodiment of the disclosure will be described with reference to the drawings.

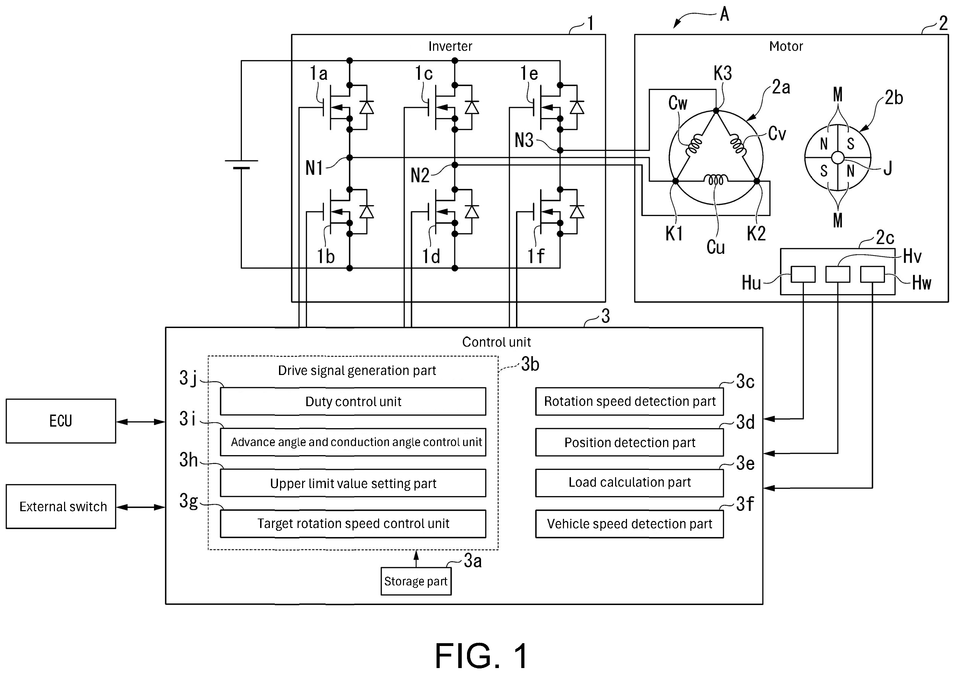

A vehicle wiper drive device A according to the present embodiment includes an inverter 1, a three-phase motor 2, and a control unit 3, as illustrated in FIG. 1. The vehicle wiper drive device A is mounted on a vehicle such as an automobile, and applies a motor drive signal from the inverter 1 to the three-phase motor 2 at a predetermined conduction angle and a predetermined normal conduction timing.

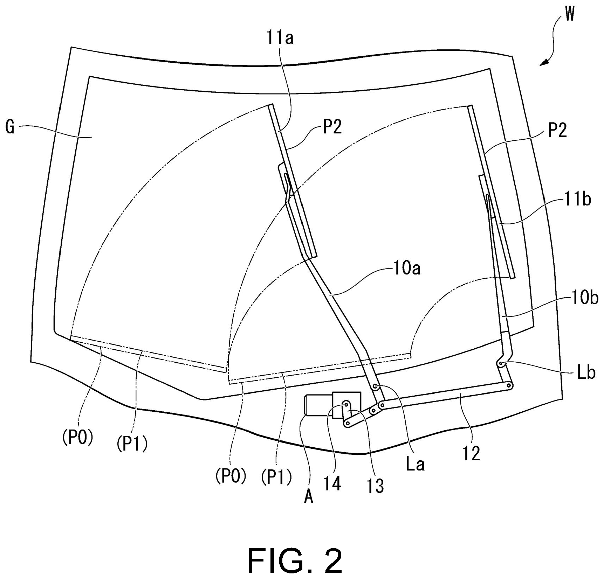

The vehicle wiper drive device A has a wiper mechanism W illustrated in FIG. 2 as the drive target. The wiper mechanism W is a mechanical device provided on a front glass G of a vehicle, and wipes rainwater adhering to a surface (wiping surface) of the front glass G. Such a wiper mechanism W, together with the vehicle wiper drive device A according to the present embodiment, constitutes a wiper device.

To further describe the wiper mechanism W, the wiper mechanism W includes a pair of wiper arms 10a, 10b, a pair of wiper blades 11a, 11b, a power transmission mechanism 12, a crank arm 13, and a drive shaft 14. The wiper mechanism W is driven by the three-phase motor 2 of the vehicle wiper drive device A.

The pair of wiper arms 10a, 10b reciprocate about a pair of rotation axes La, Lb. The pair of rotation axes La, Lb are provided on the vehicle, and rotatably support the pair of wiper arms 10a, 10b.

A wiper arm (one) 10a is a substantially L-shaped member, and reciprocates about a rotation axis La (one) provided at a position separated by a predetermined distance from a bent portion. A wiper arm (other) 10b is a substantially rod-shaped member, and reciprocates about a rotation axis Lb (other) provided at a position separated by a predetermined distance from one end.

A pair of wiper blades 11a, 11b are rod-shaped members mounted on tip portions of the pair of wiper arms 10a, 10b. As illustrated, a wiper blade (one) 11a has a portion near the center mounted on a tip portion of the wiper arm (one) 10a. A wiper blade (other) 11b has a portion near the center mounted on a tip portion of the wiper arm (other) 10b.

The pair of wiper blades 11a, 11b have portions near the center connected to the pair of wiper arms 10a, 10b, and thus reciprocate while sliding along the wiping surface of the front glass G in conjunction with the reciprocating motion of the pair of wiper arms 10a, 10b. Rainwater on the wiping surface is wiped by the sliding reciprocation of the pair of wiper blades 11a, 11b.

The power transmission mechanism 12 is a rod-shaped member that connects a bent portion of the wiper arm (one) 10a and a rear end portion of the wiper arm (other) 10b. The power transmission mechanism 12 is a member that connects the pair of wiper arms 10a, 10b, and causes the pair of wiper arms 10a, 10b and the pair of wiper blades 11a, 11b to reciprocate in synchronization.

The crank arm 13 is a rod-shaped member having one end connected to a rear end portion of the wiper arm (one) 10a and the other end connected to the drive shaft 14. The crank arm 13 has one end rotatably connected to the rear end portion of the wiper arm (one) 10a, and causes the pair of wiper arms 10a, 10b to reciprocate by swinging in conjunction with the rotation of the drive shaft 14.

The drive shaft 14 is a rotation shaft driven by the three-phase motor 2 of the vehicle wiper drive device A. A coupler (not illustrated) that converts the rotation of the three-phase motor 2 into the rotation of the drive shaft 14 is provided between the three-phase motor 2 and the drive shaft 14. The drive shaft 14 is coupled to a motor shaft of the three-phase motor 2 via the coupler, and rotates in the forward and reverse directions within a predetermined angular range.

That is, in the wiper mechanism W, the drive shaft 14 rotates in the forward and reverse directions within a predetermined angular range, whereby the pair of wiper arms 10a, 10b reciprocate about the pair of rotation axes La, Lb. The pair of wiper blades 11a, 11b reciprocate between a lower reversal position P1 and an upper reversal position P2 on the wiping surface in conjunction with such reciprocating motion of the pair of wiper arms 10a, 10b.

The pair of wiper blades 11a, 11b are positioned at a storage position P0 illustrated in the drawing in a state where the wiper device is stopped. The storage position P0 is set below the lower reversal position P1, and is a position that does not obstruct the field of view of a driver operating the vehicle on the wiping surface.

In the vehicle wiper drive device A that drives the wiper mechanism W as a drive target, the inverter 1 is a power converter that converts DC power supplied from a battery (DC power supply) of the vehicle into three-phase AC power. The inverter 1 includes six switching transistors 1a to 1f as illustrated in FIG. 1.

The first switching transistor 1a is a P-channel MOS (Metal-Oxide-Semiconductor) transistor that constitutes a U-phase upper arm and includes a parasitic diode. The first switching transistor 1a has a drain terminal connected to a positive electrode of the battery and a source terminal connected to a drain terminal of the second switching transistor 1b. The first switching transistor 1a also has a gate terminal connected to a first output terminal of the control unit 3.

The second switching transistor 1b is a P-channel MOS (Metal-Oxide-Semiconductor) transistor that constitutes a U-phase lower arm and includes a parasitic diode. The second switching transistor 1b has a drain terminal connected to a source terminal of the first switching transistor 1a and a source terminal connected to a negative electrode of the battery. The second switching transistor 1b also has a gate terminal connected to a second output terminal of the control unit 3.

The third switching transistor 1c is a P-channel MOS (Metal-Oxide-Semiconductor) transistor that constitutes a V-phase upper arm and includes a parasitic diode. The third switching transistor 1c has a drain terminal connected to the positive electrode of the battery and a source terminal connected to a drain terminal of the fourth switching transistor 1d. The third switching transistor 1c also has a gate terminal connected to a third output terminal of the control unit 3.

The fourth switching transistor 1d is a P-channel MOS (Metal-Oxide-Semiconductor) transistor that constitutes a V-phase lower arm and includes a parasitic diode. The fourth switching transistor 1d has a drain terminal connected to a source terminal of the third switching transistor 1c and a source terminal connected to the negative electrode of the battery. The fourth switching transistor 1d also has a gate terminal connected to a fourth output terminal of the control unit 3.

The fifth switching transistor 1e is a P-channel MOS (Metal-Oxide-Semiconductor) transistor that constitutes a W-phase upper arm and includes a parasitic diode. The fifth switching transistor 1e has a drain terminal connected to the positive electrode of the battery and a source terminal connected to a drain terminal of the sixth switching transistor 1f. The fifth switching transistor 1e also has a gate terminal connected to a fifth output terminal of the control unit 3.

The sixth switching transistor 1f is a P-channel MOS (Metal-Oxide-Semiconductor) transistor that constitutes a W-phase lower arm and includes a parasitic diode. The sixth switching transistor 1f has a drain terminal connected to a source terminal of the fifth switching transistor 1e and a source terminal connected to the negative electrode of the battery. The sixth switching transistor 1f also has a gate terminal connected to a sixth output terminal of the control unit 3.

In the inverter 1, a connection point between a source terminal of the first switching transistor 1a and a drain terminal of the second switching transistor 1b is a U-phase output terminal N1 that outputs a U-phase motor drive signal. A connection point between a source terminal of the third switching transistor 1c and a drain terminal of the fourth switching transistor 1d is a V-phase output terminal N2 that outputs a V-phase motor drive signal. A connection point between a source terminal of the fifth switching transistor 1e and a drain terminal of the sixth switching transistor 1f is a W-phase output terminal N3 that outputs a W-phase motor drive signal.

The three-phase motor 2 is a three-phase four-pole brushless synchronous motor driven by three motor drive signals supplied from the inverter 1, namely a U-phase motor drive signal, a V-phase motor drive signal, and a W-phase motor drive signal. The three-phase motor 2 includes a stator 2a, a rotor 2b, and a rotation sensor 2c.

The stator 2a is an annular member in which a U-phase winding Cu, a V-phase winding Cv, and a W-phase winding Cw are wound around multiple pole teeth provided at predetermined intervals on a stator core, respectively. The U-phase winding Cu, the V-phase winding Cv, and the W-phase winding Cw are, for example, delta-connected as illustrated, and include three power supply points K1 to K3.

A first power supply point K1 is connected to the U-phase output terminal N1 of the inverter 1 and is a U-phase power supply point to which a U-phase motor drive signal is supplied. A second power supply point K2 is connected to the V-phase output terminal N2 of the inverter 1 and is a V-phase power supply point to which a V-phase motor drive signal is supplied. A third power supply point K3 is connected to the W-phase output terminal N3 of the inverter 1 and is a W-phase power supply point to which a W-phase motor drive signal is supplied.

The rotor 2b is a substantially cylindrical member provided inside the stator 2a. The rotor 2b includes a rotor shaft J, a rotor core (not illustrated) fitted and fixed onto the rotor shaft J, and a four-pole permanent magnet M mounted in the circumferential direction of the rotor core. The rotor shaft J is a cylindrical member rotatably supported by a casing (not illustrated) of the motor 2 via bearings. The four-pole permanent magnet M is provided such that polarities are alternately arranged in the circumferential direction of the rotor shaft J, as illustrated.

The rotation sensor 2c is a detector that detects a rotation state of the rotor 2b. The rotation sensor 2c includes, for example, three hall elements, namely a U-phase hall element Hu, a V-phase hall element Hv, and a W-phase hall element Hw. The U-phase hall element Hu, the V-phase hall element Hv, and the W-phase hall element Hw sequentially output pulse signals having phases different from each other in response to rotation of the rotor 2b.

For example, the U-phase hall element Hu outputs a U-phase pulse signal to the control unit, the U-phase pulse signal indicating, as a phase, a rotational position of the rotor 2b corresponding to the U-phase winding Cu. The V-phase hall element Hv outputs a V-phase pulse signal to the control unit, the V-phase pulse signal indicating, as a phase, a rotational position of the rotor 2b corresponding to the V-phase winding Cv. The W-phase hall element Hw outputs a W-phase pulse signal to the control unit, the W-phase pulse signal indicating, as a phase, a rotational position of the rotor 2b corresponding to the W-phase winding Cw.

The control unit 3 is a software control device that controls rotation of the three-phase motor 2 based on a control program stored in advance. That is, the control unit 3 is configured as an embedded computer including hardware resources and software resources, and controls rotation of the three-phase motor 2 by executing a control program, which is a software resource, on hardware resources such as a CPU (Central Processing Unit) and a memory.

The control unit 3 is electrically connected to an ECU (Electronic Control unit) and an external switch provided in the vehicle, and also to the rotation sensor 2c of the three-phase motor 2. The control unit 3 references higher-level control information input from the ECU and an operation signal input from the external switch upon executing the control program.

The control unit 3 also references the U-phase pulse signal, the V-phase pulse signal, and the W-phase pulse signal input from the U-phase hall element Hu, the V-phase hall element Hv, and the W-phase hall element Hw of the rotation sensor 2c. The control unit 3 determines the rotation state of the three-phase motor 2 based on the U-phase pulse signal, the V-phase pulse signal, and the W-phase pulse signal, and determines the positions of the pair of wiper blades 11a, 11b on the wiping surface based on the rotation state.

The control unit 3 generates six inverter drive signals by using, as control information, the positions of the pair of wiper blades 11a, 11b based on the U-phase pulse signal, the V-phase pulse signal, and the W-phase pulse signal. The control unit 3 controls rotation of the three-phase motor 2 by outputting the six inverter drive signals to the inverter 1.

The six inverter drive signals are output from the above-described first to sixth output terminals to the gate terminals of the six switching transistors 1a to 1f, respectively. In the present embodiment, PWM (Pulse Width Modulation) signals are adopted as the six inverter drive signals.

That is, the control unit 3 performs PWM control of the three-phase motor 2 by outputting six PWM signals to the six switching transistors 1a to 1f, respectively. In the three-phase motor 2, the rotation speed of the motor is adjusted by adjusting the amplitudes of the U-phase motor drive signal, the V-phase motor drive signal, and the W-phase motor drive signal based on the duty ratio of the first to sixth PWM signals.

Such a control unit 3 performs conduction angle control of the three-phase motor 2 in addition to the PWM control of the three-phase motor 2 described above. That is, the control unit 3 performs 120° conduction, which limits the output time of the U-phase motor drive signal, the V-phase motor drive signal, and the W-phase motor drive signal to the inverter 1 (conduction time to the three-phase motor 2) to 120° with respect to the electrical angle of the three-phase motor 2, or overlap conduction, which limits the output time to a conduction angle range greater than 120°. The 120° conduction in such conduction angle control acts to prevent overcurrent of the three-phase motor 2.

Furthermore, the control unit 3 performs reference position conduction control and advance angle control of the three-phase motor 2 in addition to the PWM control and the conduction angle control. That is, the control unit 3 performs reference position conduction control, which sets the output start timing (advance angle) of the V-phase motor drive signal and the W-phase motor drive signal to the inverter 1 to a reference position (0°) in the electrical angle of the three-phase motor 2, or advance angle control, which advances the output start timing relative to the reference position. The advance angle control increases the motor torque of the three-phase motor 2 compared to the reference position conduction control. In the reference position conduction control, the induced voltage generated by the rotation of the rotor 2b and the motor drive signal are in phase with each other.

That is, the control unit 3 appropriately sets the duty ratio, the conduction angle, and the advance angle of the U-phase motor drive signal, the V-phase motor drive signal, and the W-phase motor drive signal based on the PWM control, the conduction angle control, the reference position conduction control, and the advance angle control. In the three-phase motor 2, the rotational torque is controlled by inputting such U-phase motor drive signal, V-phase motor drive signal, and W-phase motor drive signal to the inverter 1, whereby the rotation speed and rotational velocity are adjusted.

Here, the control unit 3 includes multiple control modes. That is, the control unit 3 includes a high-speed mode used during normal operation in which the three-phase motor 2 is rotating and being driven normally. In the high-speed mode, the conduction angle is set to a value greater than 120°, and the advance angle is set to a position advanced relative to the reference position (0°).

In addition, the control unit 3 includes a low-speed mode used at the time of starting the three-phase motor 2 or in a case where the rotation speed of the three-phase motor 2 is lower than during normal operation due to a sudden load or the like. In the low-speed mode, the conduction angle is set to 120°, and the advance angle is set to the reference position (0°).

Furthermore, the control unit 3 includes a first forced storage mode and a second forced storage mode as control modes for forcibly moving the pair of wiper blades 11a, 11b to the storage position P0 in a case where a load is applied to the three-phase motor 2 due to wind while driving or an obstacle. In the first forced storage mode and the second forced storage mode, the conduction angle is set to 120°, and the advance angle is set to a position advanced relative to the reference position (0°).

As shown in FIG. 1, such a control unit 3 includes a storage part 3a, a drive signal generation part 3b, a rotation speed detection part 3c, a position detection part 3d, a load calculation part 3e, and a vehicle speed detection part 3f as functional components achieved by cooperation of hardware resources and software resources. In addition, the drive signal generation part 3b includes a target rotation speed control unit 3g, an upper limit value setting part 3h, an advance angle and conduction angle control unit 3i, and a duty control unit 3j as functional components as well.

The storage part 3a is an aggregate of volatile memory such as RAM (Random Access Memory) and non-volatile memory such as ROM (Read Only Memory). The storage part 3a stores, in the non-volatile memory, various control data required for execution of the control program in addition to the control program described above. The storage part 3a is connected to the drive signal generation part 3b, and outputs the various control data to the drive signal generation part 3b.

Note that the control data includes at least various threshold values, for example, a vehicle speed threshold value relating to the vehicle speed of the vehicle, a first threshold value and a second threshold value relating to the rotation speed of the motor, and a load threshold value relating to the load.

The drive signal generation part 3b generates six PWM signals (inverter drive signals) based on various control data input from the storage part 3a, higher-level control information input from the ECU and operation signals input from the external switch, and various detection values input from the rotation speed detection part 3c, the position detection part 3d, the load calculation part 3e, and the vehicle speed detection part 3f.

The drive signal generation part 3b outputs a first PWM signal from a first output terminal to the gate terminal of the first switching transistor 1a. In addition, the drive signal generation part 3b outputs a second PWM signal from a second output terminal to the gate terminal of the second switching transistor 1b. In addition, the drive signal generation part 3b outputs a third PWM signal from a third output terminal to the gate terminal of the third switching transistor 1c.

In addition, the drive signal generation part 3b outputs a fourth PWM signal from a fourth output terminal to the gate terminal of the fourth switching transistor 1d. In addition, the drive signal generation part 3b outputs a fifth PWM signal from a fifth output terminal to the gate terminal of the fifth switching transistor 1e. In addition, the drive signal generation part 3b outputs a sixth PWM signal from a sixth output terminal to the gate terminal of the sixth switching transistor 1f.

The rotation speed detection part 3c detects the rotation speed (rotation speed of the motor) of the three-phase motor 2 based on the U-phase pulse signal, the V-phase pulse signal, and the W-phase pulse signal input from the U-phase hall element Hu, the V-phase hall element Hv and the W-phase hall element Hw in the rotation sensor 2c. The rotation speed detection part 3c outputs the rotation speed of the motor to the drive signal generation part 3b.

The position detection part 3d detects the rotational position of the rotor 2b in the three-phase motor 2 based on the U-phase pulse signal, the V-phase pulse signal, and the W-phase pulse signal input from the U-phase hall element Hu, the V-phase hall element Hv and the W-phase hall element Hw in the rotation sensor 2c. The position detection part 3d outputs a rotational position detection value indicating the rotational position of the rotor 2b to the drive signal generation part 3b.

The load calculation part 3e detects the load (motor load) of the three-phase motor 2 based on the power supply voltage, the rotation speed of the motor, and the six PWM signals (inverter drive signals) generated by the drive signal generation part 3b.

Specifically, the load calculation part 3e calculates and accumulates load point values from the rotation speed of the motor and the duty ratio of the six PWM signals, and generates a cumulative load point value. The load calculation part 3e acquires a load point value corresponding to the rotation speed of the motor, the duty ratio, and the power supply voltage by referring to, for example, a load point map (not illustrated) that associates the rotation speed of the motor, the duty ratio, and the power supply voltage with the load point value. The load calculation part 3e sequentially integrates the acquired load point values at predetermined time intervals, and outputs the cumulative point value to the drive signal generation part 3b as a load integrated value indicating the load of the three-phase motor 2.

The vehicle speed detection part 3f detects the vehicle speed of the vehicle based on the higher-level control information input from the ECU. Specifically, the higher-level control information includes at least vehicle speed information indicating the vehicle speed of the vehicle. The vehicle speed detection part 3f outputs a vehicle speed detection value indicating the vehicle speed of the vehicle to the drive signal generation part 3b by referring to the vehicle speed information.

In the drive signal generation part 3b, the target rotation speed control unit 3g sets a target rotation speed of the three-phase motor 2 based on the higher-level control information input from the ECU and the operation signal input from the external switch. The target rotation speed control unit 3g outputs the target rotation speed to the duty control unit 3i.

The upper limit value setting part 3h sets an upper limit value (duty upper limit value) relating to the duty ratio of the six PWM signals (inverter drive signals) based on the control program. The upper limit value setting part 3h outputs the duty upper limit value to the duty control unit 3i. The duty control unit 3i sets the duty ratio so as not to exceed the duty upper limit value.

The advance angle and conduction angle control unit 3i sets a conduction angle in the conduction control of the three-phase motor 2 and an advance angle value in the advance angle control of the three-phase motor 2. Specifically, the advance angle and conduction angle control unit 3i sets the conduction angle and the advance angle in the six PWM signals to predetermined values. The advance angle and conduction angle control unit 3i outputs a conduction angle setting value and an advance angle setting value to the duty control unit 3i.

The duty control unit 3i sets the duty ratio of the six PWM signals by performing arithmetic processing based on a PWM control method on the rotation speed detection value, the rotational position detection value, the load integrated value, and the vehicle speed detection value described above, as well as the target rotation speed and the duty upper limit value. The duty control unit 3i also sets the output timing of the six PWM signals based on the conduction angle setting value and the advance angle setting value. The duty control unit 3i generates the six PWM signals according to the duty ratio and the output timing, and outputs the six PWM signals to the inverter 1.

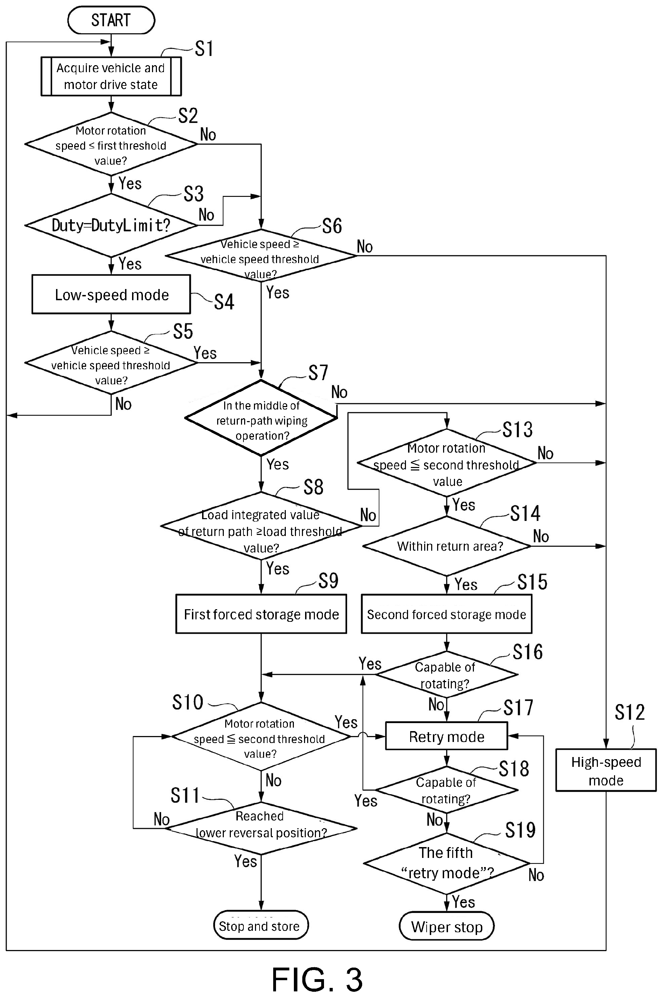

Next, the operation of the vehicle wiper drive device A according to the present embodiment will be described along the flowchart illustrated in FIG. 3.

In driving the wiper mechanism W by the vehicle wiper drive device A, the control unit 3 first acquires the vehicle and motor drive state (step S1). Specifically, in step S1, the control unit 3 acquires the higher-level control information from the ECU and also acquires the operation signal from the external switch. The control unit 3 also acquires a U-phase pulse signal, a V-phase pulse signal, and a W-phase pulse signal from the rotation sensor 2c of the three-phase motor 2 in step S1.

The control unit 3 then determines whether the rotation speed of the motor is equal to or less than a first threshold value (step S2). Specifically, in step S2, the control unit 3 determines whether the rotation speed of the motor is equal to or less than the first threshold value by comparing the rotation speed of the motor detected by the rotation speed detection part 3c with the first threshold value stored in advance in the storage part 3a. The first threshold value corresponds to the rotation speed threshold value in the disclosure.

In the case where the determination in step S2 is "Yes", that is, in the case where the rotation speed of the motor is equal to or less than the first threshold value, the control unit 3 determines whether the duty ratio (Duty) of the six PWM signals is set to the duty upper limit value (DutyLimit) (step S3). Specifically, the control unit 3 determines whether the duty ratio (Duty) is set to the duty upper limit value (DutyLimit) by comparing the duty ratio (Duty) of the six PWM signals set by the duty control unit 3i with the duty upper limit value (DutyLimit) set by the upper limit value setting part 3h.

In the case where the determination in step S3 is "Yes", that is, in the case where the duty ratio (Duty) is equal to the duty upper limit value (DutyLimit), the control unit 3 sets the control mode to the low-speed mode (step S4). Specifically, the control unit 3 sets the conduction angle in the conduction control to 120° and sets the advance angle in the advance angle control to a reference value (0°) in the advance angle and conduction angle control unit 3i.

The control unit 3 also generates six PWM signals in the duty control unit 3i, in which the duty ratio is set to the duty upper limit value, the conduction angle is set to 120°, and the advance angle is set to the reference value (0°), and outputs the six PWM signals to the inverter 1. As a result, the inverter 1 generates a U-phase motor drive signal, a V-phase motor drive signal, and a W-phase motor drive signal corresponding to the duty ratio at the duty upper limit value, the conduction angle at 120°, and the advance angle at the reference value (0°), and outputs the U-phase motor drive signal, the V-phase motor drive signal, and the W-phase motor drive signal to the three-phase motor 2.

Subsequently, the control unit 3 determines whether the vehicle speed is equal to or greater than the vehicle speed threshold value (step S5). Specifically, in step S5, the control unit 3 determines whether the vehicle speed is equal to or greater than the vehicle speed threshold value by comparing the vehicle speed of the vehicle detected by the vehicle speed detection part 3f with the vehicle speed threshold value stored in advance in the storage part 3a.

In the case where the determination in step S5 is "No", that is, in the case where the vehicle speed is lower than the vehicle speed threshold value, the control unit 3 continues the low-speed mode and returns to step S1.

Subsequently, in the case where the determination in step S2 is "No", that is, in the case where the rotation speed of the motor is greater than the first threshold value, or in the case where the determination in step S3 is "No", that is, in the case where the duty ratio (Duty) is less than the duty upper limit value (DutyLimit), the control unit 3 determines whether the vehicle speed is equal to or greater than the vehicle speed threshold value, in the same manner as in step S5 described above (step S6).

In the case where the determination in step S6 is "Yes", that is, in the case where the vehicle speed is equal to or greater than the vehicle speed threshold value, the control unit 3 determines whether the pair of wiper blades 11a, 11b are in the middle of a return-path wiping operation (step S7). Note that the determination process of step S7 is also executed in the case where the determination in step S5 is "Yes", that is, in the case where the vehicle speed is equal to or greater than the vehicle speed threshold value, as illustrated.

Specifically, in step S7, the control unit 3 determines the positions of the pair of wiper blades 11a, 11b on the wiping surface based on the rotational position of the rotor 2b detected by the position detection part 3d, and determines whether the pair of wiper blades 11a, 11b are moving from the upper reversal position P2 toward the lower reversal position P1.

In the case where the determination in step S7 is "Yes", that is, in the case where the pair of wiper blades 11a, 11b are in the middle of a return-path wiping operation, the control unit 3 determines whether the load integrated value of the return path is equal to or greater than the load threshold value (step S8). Specifically, the control unit 3 determines whether the load integrated value of the return path is equal to or greater than the load threshold value by comparing the load integrated value of the three-phase motor 2 on the return path of the pair of wiper blades 11a, 11b calculated by the load calculation part 3e with the load threshold value stored in advance in the storage part 3a.

In the case where the determination in step S8 is "Yes", that is, in the case where the load integrated value of the return path is equal to or greater than the load threshold value, the control unit 3 sets the control mode to the first forced storage mode (step S9). Specifically, the control unit 3 maintains the conduction angle in the conduction control at 120° in the advance angle and conduction angle control unit 3i, and sets the advance angle in the advance angle control to a predetermined advance angle value greater than 0°.

In addition, in the duty control unit 3i, the control unit 3 generates six PWM signals in which the conduction angle is set to 120° and the advance angle is set to a predetermined advance angle value greater than 0°, and outputs the six PWM signals to the inverter 1. As a result, the inverter 1 generates a U-phase motor drive signal, a V-phase motor drive signal, and a W-phase motor drive signal corresponding to the conduction angle of 120° and the predetermined advance angle value greater than 0°, and outputs the signals to the three-phase motor 2.

Specifically, in the case where the vehicle speed is equal to or greater than the vehicle speed threshold value, the pair of wiper blades 11a, 11b are in the middle of a return-path wiping operation, and the load integrated value of the return path is equal to or greater than the load threshold value, the three-phase motor 2 moves the pair of wiper blades 11a, 11b toward the storage position P0 urgently in the first forced storage mode.

Then, upon setting the control mode to the first forced storage mode in step S9, the control unit 3 determines whether the rotation speed of the motor is equal to or less than the second threshold value (step S10). Specifically, in step S10, the control unit 3 determines whether the rotation speed of the motor is equal to or less than the second threshold value by comparing the rotation speed of the motor detected by the rotation speed detection part 3c with the second threshold value stored in advance in the storage part 3a. Note that the second threshold value is a value smaller than the first threshold value. In the case where the rotation speed of the motor is equal to or less than the second threshold value, the control unit 3 determines that the three-phase motor 2 is in the locked state.

In the case where the determination in step S10 is "No", that is, in the case where the rotation speed of the motor is greater than the second threshold value, the control unit 3 determines whether the pair of wiper blades 11a, 11b have reached the lower reversal position P1 (step S11).

Specifically, in step S11, the control unit 3 determines whether the pair of wiper blades 11a, 11b have reached the lower reversal position P1 by determining the position of the pair of wiper blades 11a, 11b on the wiping surface based on the rotation speed of the motor detected by the rotation speed detection part 3c.

Then, in the case where the determination in step S11 is "Yes", the control unit 3 stops and stores the pair of wiper blades 11a, 11b. Specifically, the control unit 3 moves the pair of wiper blades 11a, 11b to the storage position P0, then stops the rotation of the three-phase motor 2 and prohibits the next wiping operation. In addition, in the case where the determination in step S11 is "No", the control unit 3 again determines whether the rotation speed of the motor has become equal to or less than the second threshold value by repeating the determination process of step S10.

Note that in the case where the determination in step S6 described above is "No", that is, in the case where the vehicle speed is less than the vehicle speed threshold value, and also in the case where the determination in step S7 is "No", that is, in the case where the pair of wiper blades 11a, 11b are not in the middle of a return-path wiping operation (in the case where they are in the middle of a forward path wiping operation), the control mode is set to the high-speed mode (step S12).

The control unit 3 maintains, in the advance angle and conduction angle control unit 3i, the conduction angle in the conduction control at a predetermined conduction angle greater than 120°, and sets the advance angle in the advance angle control to a predetermined advance angle value greater than 0°. In addition, the control unit 3 generates, in the duty control unit 3i, six PWM signals set to a predetermined conduction angle greater than 120° and a predetermined advance angle value greater than 0°, and outputs the six PWM signals to the inverter 1.

As a result, the inverter 1 generates a U-phase motor drive signal, a V-phase motor drive signal, and a W-phase motor drive signal corresponding to a predetermined conduction angle greater than 120° and a predetermined advance angle value greater than 0°, and outputs the signals to the three-phase motor 2. In the high-speed mode, the control unit 3 causes the pair of wiper blades 11a, 11b to reciprocate in accordance with the target rotation speed by rotating the three-phase motor 2 at a higher drive output than in the low-speed mode.

Specifically, the three-phase motor 2 causes the pair of wiper blades 11a, 11b to perform the wiping operation in accordance with the target rotation speed by setting the control mode to the high-speed mode in the case where the rotation speed of the motor is greater than the first threshold value and the vehicle speed is less than the vehicle speed threshold value, in the case where the rotation speed of the motor is equal to or less than the first threshold value but the duty ratio (Duty) differs from the duty upper limit value (DutyLimit) and the vehicle speed is less than the vehicle speed threshold value, and also in the case where in the low-speed mode the vehicle speed is equal to or greater than the vehicle speed threshold value and the pair of wiper blades 11a, 11b are not in the middle of a return-path wiping operation.

On the other hand, in the case where the determination in step S8 described above is "No", that is, in the case where the load integrated value of the return path is less than the load threshold value, the control unit 3 determines whether the rotation speed of the motor is equal to or less than the second threshold value (step S13). Specifically, in step S13, the control unit 3 determines whether the rotation speed of the motor is equal to or less than the second threshold value by comparing the rotation speed of the motor detected by the rotation speed detection part 3c with the second threshold value stored in advance in the storage part 3a.

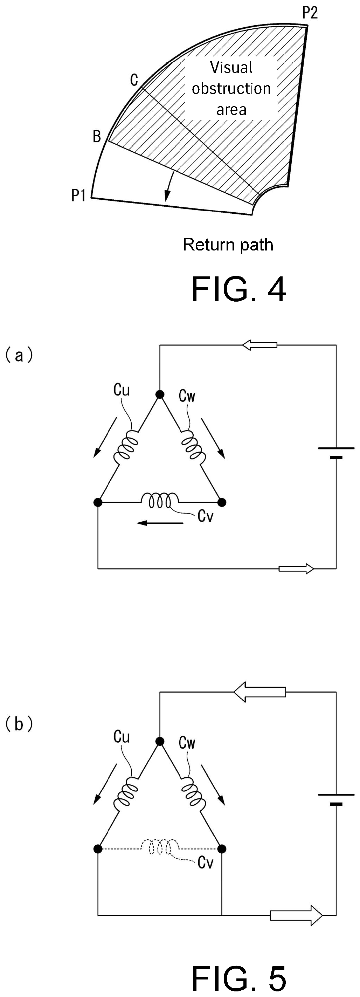

Then, in the case where the determination in step S13 is "Yes", that is, in the case where the rotation speed of the motor is equal to or less than the second threshold value, the control unit 3 determines whether the pair of wiper blades 11a, 11b are within the visual obstruction area of the return path (step S14). The visual obstruction area is, as shown in FIG. 4, a region on the wiping surface that may obstruct the field of view of the driver of the vehicle. Specifically, the visual obstruction area of the return path is a range from the upper reversal position P2 to a boundary B (boundary point), and the boundary B is located below a point C that is an intermediate point between the upper reversal position P2 and the lower reversal position P1, and above the lower reversal position P1.

Specifically, in step S14, the control unit 3 determines whether the pair of wiper blades 11a, 11b moving along the return path may obstruct the field of view of the driver by determining the positions of the pair of wiper blades 11a, 11b on the wiping surface based on the rotational position of the rotor 2b detected by the position detection part 3d.

In the case where the determination in step S14 is "Yes", that is, in the case where the pair of wiper blades 11a, 11b moving along the return path are within the visual obstruction area, the control unit 3 sets the control mode to the second forced storage mode (step S15). Specifically, the control unit 3, in the same manner as the first forced storage mode described above, sets the conduction angle in the conduction control to 120° in the advance angle and conduction angle control unit 3i, and sets the advance angle in the advance angle control to a predetermined advance angle value greater than 0°.

Further, the control unit 3 causes the duty control unit 3i to generate six PWM signals set to a conduction angle of 120° and a predetermined advance angle value greater than 0°, and outputs the signals to the inverter 1. As a result, the inverter 1 generates a U-phase motor drive signal, a V-phase motor drive signal, and a W-phase motor drive signal corresponding to a conduction angle of 120° and a predetermined advance angle value greater than 0°, and outputs the signals to the three-phase motor 2.

Specifically, the three-phase motor 2 causes the pair of wiper blades 11a, 11b to move urgently toward the storage position P0 in the second forced storage mode in the case where the rotation speed of the motor is equal to or less than the second threshold value and the pair of wiper blades 11a, 11b are in the middle of wiping within the visual obstruction area of the return path.

Then, in the case where the control unit 3 sets the control mode to the second forced storage mode in step S15, the control unit 3 determines whether the three-phase motor 2 is capable of rotating (step S16). Specifically, in step S16, the control unit 3 determines whether the three-phase motor 2 is performing a rotating operation based on the rotation speed of the motor detected by the rotation speed detection part 3c.

Then, in the case where the determination in step S16 is "No", that is, in the case where the three-phase motor 2 does not rotate, the control unit 3 sets the control mode to a retry mode (step S17). The retry mode is a mode that assumes a case where the wiping operation of the pair of wiper blades 11a, 11b is blocked by an obstacle such as accumulated snow, and attempts to move and remove the obstacle by the pair of wiper blades 11a, 11b by repeatedly rotating the three-phase motor 2 in forward and reverse directions. Specifically, in the retry mode of step S17, the control unit 3 generates six PWM signals for reversing the three-phase motor 2 and outputs the signals to the inverter 1, and thereafter generates six PWM signals for rotating the three-phase motor 2 in the forward direction again and outputs the signals to the inverter 1.

Upon completion of the processing in step S17, the control unit 3 determines again whether the three-phase motor 2 is capable of rotating (step S18). Then, in the case where the determination in step S18 is "No", that is, in the case where the three-phase motor 2 does not rotate, the control unit 3 determines whether the retry mode has been executed five times (step S19).

Then, in the case where the determination in step S19 is "Yes", that is, in the case where the three-phase motor 2 does not rotate even after the retry mode has been executed five times, the control unit 3 stops the wiper mechanism W. Further, in the case where the determination in step S19 is "No", that is, in the case where the number of times the retry mode has been executed is one to four times, the control unit 3 repeats the retry mode of step S17, thereby executing the retry mode five times.

Further, in the case where the determination in step S16 or step S18 is "Yes", that is, in the case where the three-phase motor 2 rotates, the control unit 3 executes step S11 as in the case where the determination in step S10 described above is "No", thereby causing the pair of wiper blades 11a, 11b to move urgently toward the storage position P0.

Note that in the case where the determination in step S10 is "Yes", that is, in the case where the rotation speed of the motor is equal to or less than the second threshold value, the control unit 3 executes the retry mode of step S17. Specifically, the control unit 3 attempts to rotationally drive the three-phase motor 2 by generating six PWM signals for reversing the three-phase motor 2 and outputting the signals to the inverter 1, and thereafter generating six PWM signals for rotating the three-phase motor 2 in the forward direction and outputting the signals to the inverter 1.

As described above, the vehicle wiper drive device A according to the present embodiment applies a motor drive signal from the inverter 1 to the three-phase motor 2 to cause the wiper blades 11a, 11b to perform a reciprocating wiping operation between the lower reversal position P1 and the upper reversal position P2 provided on the surface to be wiped, and includes a control unit 3 that calculates a load integrated value of the three-phase motor 2, and in the case where the vehicle speed is equal to or greater than a predetermined vehicle speed threshold value and the load integrated value is equal to or greater than a predetermined load threshold value, executes a first forced storage mode in which a 120° conduction control is performed to set the conduction angle of the motor drive signal to 120°, and an advance angle control is performed to advance the conduction timing of the motor drive signal relative to a reference position, thereby moving the wiper blades 11a, 11b toward the storage position P0 (position that does not obstruct the field of view), stopping the wiper blades 11a, 11b at the storage position P0, and prohibiting the next wiping operation.

According to the present embodiment, the vehicle wiper drive device is provided that is capable of moving the wiper blades 11a, 11b to the storage position P0 (position that does not obstruct the field of view) while preventing or reducing damage to the three-phase motor 2 under a high load condition of the three-phase motor 2.

Specifically, the vehicle wiper drive device A according to the present embodiment performs 120° conduction control of the three-phase motor 2 in moving the wiper blades 11a, 11b to the lower reversal position P1 (position that does not obstruct the field of view). The 120° conduction control in the three-phase motor 2 is a non-overlap conduction control in which no overlap of the motor drive signal exists between the U-phase and the V-phase, between the V-phase and the W-phase, and between the W-phase and the U-phase.

In such 120° conduction control, as shown in (a) of FIG. 5, the conduction to the three-phase motor 2 is limited to the three-phase conduction interval, so overcurrent in the three-phase motor 2 may be prevented. Accordingly, according to the present embodiment, damage to the three-phase motor 2 may be prevented or reduced.

In contrast, in overlap conduction control in which the conduction angle is set to greater than 120° (for example, 140° conduction control), the conduction to the three-phase motor 2 includes a two-phase conduction interval, as shown in (b) of FIG. 5. Accordingly, in the overlap conduction control, overcurrent in the three-phase motor 2 cannot be sufficiently prevented, and the three-phase motor 2 may be damaged.

Further, the vehicle wiper drive device A according to the present embodiment performs advance angle control of the three-phase motor 2 relative to the reference position (0°) in moving the wiper blades 11a, 11b to the storage position P0 (position that does not obstruct the field of view).

The advance angle control improves the motor torque of the three-phase motor 2 compared to a case without advance angle control in which the conduction timing is set to the reference position (0°). Accordingly, the advance angle control enables the wiper blades 11a, 11b to be moved to the storage position P0 (position that does not obstruct the field of view) more reliably.

Further, in the vehicle wiper drive device A according to the present embodiment, the control unit 3 performs PWM control of the three-phase motor 2 using a PWM (Pulse Width Modulation) signal, and in the case where the rotation speed of the three-phase motor 2 is not more than a predetermined first threshold value and the duty ratio of the PWM signal has reached a predetermined upper limit value, the control unit 3 executes a low-speed mode in which the three-phase motor 2 is subjected to 120° conduction control without advance angle control, and the control unit 3 transitions to a first forced storage mode in the case where the vehicle speed is not less than the vehicle speed threshold value and the load integrated value has reached not less than the load threshold value during execution of the low-speed mode.

According to the present embodiment, overcurrent due to overlap conduction may be prevented at the time of starting the three-phase motor 2 or in the case where the rotation speed of the three-phase motor 2 drops significantly due to a sudden load.

Here, in the case where the rotation speed of the three-phase motor 2 is significantly low, it becomes difficult to accurately count the conduction timing (advance angle amount) from the pulse signals of the rotation sensor 2c, and thus performing advance angle control may cause the behavior of the three-phase motor 2 to become unstable. Therefore, by not performing advance angle control in the low-speed mode, the behavior of the three-phase motor 2 may be stabilized.

On the other hand, in the case where a situation arises during the low-speed mode in which the wiper blades 11a, 11b are to be urgently moved toward the lower reversal position P1 or the storage position, the control unit 3 transitions to the first forced storage mode and performs advance angle control to increase the motor torque of the three-phase motor 2, thereby enabling the wiper blades 11a, 11b to be moved reliably.

Further, in the vehicle wiper drive device A according to the present embodiment, in the case where the vehicle speed is not less than the vehicle speed threshold value, the load integrated value is lower than the load threshold value, and the three-phase motor 2 is in a locked state, the control unit 3 executes a second forced storage mode in which the wiper blades 11a, 11b are moved toward the lower reversal position P1 by performing 120° conduction control and advance angle control, the wiper blades 11a, 11b are stopped at the lower reversal position P1 or the storage position P0 set below the lower reversal position P1, and the next wiping operation is prohibited.

According to the present embodiment, even in the case where the three-phase motor 2 is locked due to a sudden load such as falling snow in a state where the load integrated value is low, the wiper blades 11a, 11b may be moved to the lower reversal position P1 or the storage position P0 (position that does not obstruct the field of view).

Further, in the vehicle wiper drive device A according to the present embodiment, the control unit 3 performs PWM control of the three-phase motor 2 using a PWM (Pulse Width Modulation) signal, and in the case where the rotation speed of the three-phase motor 2 is not more than a predetermined first threshold value and the duty ratio of the PWM signal has reached a predetermined upper limit value, the control unit 3 executes a low-speed mode in which the three-phase motor 2 is subjected to 120° conduction control without advance angle control, and the control unit 3 transitions to the second forced storage mode in the case where the vehicle speed is not less than the vehicle speed threshold value, the load integrated value is lower than the load threshold value, and the three-phase motor 2 has entered a locked state during execution of the low-speed mode.

According to the present embodiment, as described above, in the case where the rotation speed of the three-phase motor 2 drops significantly, the behavior of the three-phase motor 2 may be stabilized while preventing overcurrent, and in the case where movement of the wiper blades 11a, 11b becomes necessary, the control unit 3 may transition to the second forced storage mode.

Further, in the vehicle wiper drive device A according to the present embodiment, the control unit 3 executes the second forced storage mode only in the case where the wiper blades 11a, 11b are within a visual obstruction area (predetermined region), the visual obstruction area is a region from the upper reversal position P2 to the boundary point B, the boundary point B is below the intermediate point C between the upper reversal position P2 and the lower reversal position P1, and above the lower reversal position P1. According to the present embodiment, it is possible to prevent the wiper blades 11a, 11b from stopping in the visual obstruction area that particularly obstructs the driver's field of view.

Further, in the vehicle wiper drive device A according to the present embodiment, the control unit 3 executes a high-speed mode in which the three-phase motor 2 is subjected to overlap conduction control and advance angle control, in the case where the vehicle speed is lower than the vehicle speed threshold value, and in the case where the vehicle speed is not less than the vehicle speed threshold value and the wiper blades 11a, 11b are not performing a return-path wiping operation.

According to the present embodiment, in the case where the wiper blades 11a, 11b are not performing a return-path wiping operation, that is, in the case where the wiper blades 11a, 11b are performing a forward path wiping operation, the output of the three-phase motor 2 may be improved by executing the high-speed mode, and the wiper blades 11a, 11b may perform a stable wiping operation in accordance with the target rotation speed. Here, during the forward path wiping operation, a force acts on the wiper blades 11a, 11b in a direction toward the upper reversal position P2 due to traveling wind, and accordingly, an event in which the wiper blades 11a, 11b stop within the driver's field of view is less likely to occur, and the need to transition to the first forced storage mode and the second forced storage mode is low.

The disclosure is not limited to the above embodiment, and modification examples such as the following may be considered. For example, the above embodiment describes a case where the storage position P0 is set below the lower reversal position, however, the disclosure is not limited thereto, and the storage position P0 may be set at the same position as the lower reversal position P1.

Further, for example, the above embodiment describes a case where the wiper blades 11a, 11b are stopped at the storage position P0 in the first forced storage mode and the second forced storage mode, however, the disclosure is not limited thereto, and the stopping position of the wiper blades 11a, 11b may be any position that does not obstruct the driver's field of view. That is, the stopping position of the wiper blades 11a, 11b may be set anywhere in a region between the intermediate point C and the storage position P0.

Further, for example, the above embodiment illustrates the functional configuration of the control unit 3 in FIG. 1, however, the functional configuration of the control unit of the disclosure is not limited thereto. That is, the functional configuration of the control unit of the disclosure is not limited to the functional configuration of FIG. 1, and various modification examples may be considered.

### [Reference Signs List]

A...vehicle wiper drive device, Cu...U-phase winding, Cv...V-phase winding, Cw...W-phase winding, Hu...U-phase hall element, Hv...V-phase hall element, Hw...W-phase hall element, J...rotor shaft, M...permanent magnet, W...wiper mechanism, 1...inverter, 1a to 1f...switching transistors, 2...three-phase motor, 2a...stator, 2b...rotor, 2c...rotation sensor, 3...control unit, 3a...storage part, 3b...drive signal generation part, 3c...rotation speed detection part, 3d...position detection part, 3e...load calculation part, 3f...vehicle speed detection part, 3g...target rotation speed control unit, 3h...upper limit value setting part, 3i...advance angle and conduction angle control unit, 3j...duty control unit, 10a, 10b...wiper arms, 11a, 11b...wiper blades, 12...power transmission mechanism, 13...crank arm, 14...drive shaft

## Claims

1. A vehicle wiper drive device (A) that causes a wiper blade (11a, 11b) to perform a reciprocating wiping operation between a lower reversal position and an upper reversal position provided on a surface to be wiped by applying a motor drive signal from an inverter (1) to a three-phase motor (2), the vehicle wiper driver (A) comprising:
a control unit (3) that calculates a load integrated value of the three-phase motor (2), and in response to a vehicle speed being not less than a predetermined vehicle speed threshold value and the load integrated value being not less than a predetermined load threshold value, executes a first forced storage mode in which a 120° conduction control is performed that sets a conduction angle of the motor drive signal to 120°, and an advance angle control is performed that advances a conduction timing of the motor drive signal relative to a reference position, thereby moving the wiper blade (11a, 11b) toward a position that does not obstruct a field of view, stopping the wiper blade (11a, 11b) at the position that does not obstruct the field of view, and prohibiting a next wiping operation.

2. The vehicle wiper drive device (A) according to claim 1,
wherein the control unit (3) performs PWM control of the three-phase motor (2) using a PWM (Pulse Width Modulation) signal, and in response to a rotation speed of the three-phase motor (2) being not more than a predetermined rotation speed threshold value and a duty ratio of the PWM signal reaching a predetermined upper limit value, executes a low-speed mode in which the three-phase motor (2) is subjected to the 120° conduction control without performing the advance angle control, and
the control unit (3) transitions to the first forced storage mode in response to the vehicle speed being not less than the vehicle speed threshold value and the load integrated value being not less than the load threshold value during execution of the low-speed mode.

3. The vehicle wiper drive device (A) according to claim 1,
wherein the control unit (3) executes a second forced storage mode in which the wiper blade (11a, 11b) is moved toward the position that does not obstruct the field of view and stopped at the position that does not obstruct the field of view by performing the 120° conduction control and the advance angle control, and a next wiping operation is prohibited, in response to the vehicle speed being not less than the vehicle speed threshold value, the load integrated value being lower than the load threshold value, and the three-phase motor (2) being in a locked state.

4. The vehicle wiper drive device (A) according to claim 3,
wherein the control unit (3) performs PWM control of the three-phase motor (2) using a PWM (Pulse Width Modulation) signal, and in response to a rotation speed of the three-phase motor (2) being not more than a predetermined rotation speed threshold value and a duty ratio of the PWM signal reaching a predetermined upper limit value, executes a low-speed mode in which the three-phase motor (2) is subjected to the 120° conduction control without performing the advance angle control, and
the control unit (3) transitions to the second forced storage mode in response to the vehicle speed being not less than the vehicle speed threshold value, the load integrated value being lower than the load threshold value, and the three-phase motor (2) being in the locked state during execution of the low-speed mode.

5. The vehicle wiper drive device (A) according to claim 3,
wherein the control unit (3) executes the second forced storage mode only in a case where the wiper blade (11a, 11b) is within a predetermined region,
the predetermined region is a region from the upper reversal position to a boundary point, and
the boundary point is located below an intermediate point between the upper reversal position and the lower reversal position and above the lower reversal position.

6. The vehicle wiper drive device (A) according to any one of claims 1 to 5,
wherein the control unit (3) executes a high-speed mode in which the three-phase motor (2) is subjected to an overlap conduction control and the advance angle control, in response to the vehicle speed being lower than the vehicle speed threshold value, and in response to the vehicle speed being not less than the vehicle speed threshold value and the wiper blade (11 a, 11b) not being in a return-path wiping operation.
